(19)

Europäisches Patentamt
European Patent Office
Office européen des brevets

(11) **EP 1 829 609 A1**

(12) **EUROPEAN PATENT APPLICATION**
published in accordance with Art. 158(3) EPC

(43) Date of publication:
**05.09.2007 Bulletin 2007/36**

(21) Application number: **05767370.9**

(22) Date of filing: **25.07.2005**

(51) Int Cl.:
$B01J\ 23/34^{(2006.01)}$    $B01D\ 53/94^{(2006.01)}$
$B01J\ 23/78^{(2006.01)}$    $F01N\ 3/10^{(2006.01)}$
$B01D\ 46/42^{(2006.01)}$

(86) International application number:
**PCT/JP2005/013987**

(87) International publication number:
**WO 2006/067887 (29.06.2006 Gazette 2006/26)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.12.2004 JP 2004372622**
**21.06.2005 JP 2005180162**

(71) Applicant: **Dowa Mining Co., Ltd.**
**Tokyo 100-8282 (JP)**

(72) Inventors:
- **SUDA, Hisashi,**
  c/o Dowa Mining Co., Ltd.
  **Tokyo 100-8282 (JP)**
- **YANO, Takuya,**
  c/o Dowa Mining Co., Ltd.
  **Tokyo 100-8282 (JP)**

(74) Representative: **Wagner, Karl H.**
**WAGNER & GEYER**
**Patentanwälte**
**Gewürzmühlstrasse 5**
**80538 München (DE)**

(54) **PM COMBUSTION CATALYST AND FILTER**

(57) This is a catalyst suitable for a diesel particulate filter (DPF) that traps particulate matter (PM) present in diesel engine exhaust, being a diesel engine exhaust gas particulate matter oxidation catalyst using a perovskite-type composite oxide that has an NO adsorption domain over the range of 200-450˚C. This catalyst induces low-temperature combustion of PM but does not use noble metals so it is inexpensive and its constituent materials are not volatile at exhaust gas temperatures so it has superior durability. The perovskite-type composite oxide contains essentially no Na and is represented by the structural formula $RTO_3$, where R comprises one or more elements selected from a group made up of La, Sr, Ba, Ca and Li, and T comprises one or more elements selected from a group made up of Mn, Fe, Co, Cu, Zn, Ga, Zr, Mo, Mg, Al and Si.

FIG. 3

# EP 1 829 609 A1

**Description**

Technical Field

This invention relates to a catalyst used for the combustion of particulate matter (PM) contained in the exhaust gas of diesel engines, and to a particulate matter filter for control of diesel engine exhaust emissions using this catalyst.

Background Art

Nitrogen oxides ($NO_x$) and particulate matter (PM) are particular problems with respect to diesel engine exhaust. Among these, the particulate matter comprises fine particles constituted primarily of carbon, and the most typical method of their removal has been a method whereby a diesel particulate filter (DPF) is placed in the exhaust line to trap the particulate matter. The trapped particulate matter is burned intermittently or continuously, thus regenerating the particulate filter.

This filter regeneration process may be performed by a method wherein an electric heater, burner or the like is used to burn the particulate matter, or a method wherein the particulate filter carries a catalyst, and its catalytic effect lowers the ignition temperature of the particulate matter, thereby continuously burning the particulate matter at the exhaust gas temperature. The former method requires the addition of outside energy and the system becomes complex, so the latter catalytic method is considered to be preferable.

Examples of this catalytic method include those disclosed in Patent Reference Documents 1 and 2 and Non-Patent Reference Documents 1 and 2, where platinum (Pt) is used as the catalyst metal. However, a way of solving the problem of increased costs due to the use of noble metals as the catalyst is an important problem.

Patent Reference Document 3 recites the use of a perovskite-type composite oxide in a DPF, and indicates that the carbon black ignition temperature is decreased by the use thereof.

Non-Patent Reference Document 3 proposes the use of $V_2O_5$, $MoO_3$, $PbO$, $Cs_2MoO_4$, $AgVO_3$ or eutectic mixtures thereof as melt moving type catalysts. These mixtures melt at exhaust gas temperatures, move over the surface of a honeycomb substrate, come into contact with particulate matter and oxidize and burn it. Thus, the lower the melting point and higher the mobility of the mixtures, the greater the effect of burning particulate matter at low temperature becomes, so these are said to be more superior as catalysts. However, such low-melting point substances are highly volatile, so they have a problem in that their durability is low. Consequently, they have yet to find practical application.

Non-Patent Reference Document 4 proposes the use of a perovskite-type composite oxide containing potassium (K). However it is difficult for K to be completely contained within the structure of a perovskite-type composite oxide, and thus the K that could not be incorporated into the structure is present in oxide or hydroxide form, so it is readily eluted into moisture within the exhaust gas, again posing a problem of durability. Patent Reference Document 1: JP Hei 11-253757 A Patent Reference Document 2: JP 2003-222014 A Patent Reference Document 3: JP Hei 06-29542 B Non-Patent Reference Document 1: Earozoru Kenkyū ["Aerosol Research," published by the Japan Association of Aerosol Science and Technology] (2003), Vol.18, No. 3, pp. 185-194 Non-Patent Reference Document 2: Jidōsha Gijutsu Kai Gakujutsu Kōenkai Maezurishū ["Proceedings of the Annual Congress of the Society of Automotive Engineers of Japan"] (2002), Vol. 22, No. 02, pp. 5-8 Non-Patent Reference Document 3: Kinzoku ["Metal" magazine] Vol. 74 (2004), No. 5, pp. 449-453 Non-Patent Reference Document 4: Nippon Seramikkusu Kyōkai Gakujutsu Ronbunshi (Journal of the Ceramic Society of Japan) (2003), Vol. 111, No. 129, pp. 852-856

Problems to be Overcome by the Invention

An object of the present invention is to provide a highly active and highly durable catalyst able to burn the particulate matter (PM) in diesel engine exhaust at low temperature. The catalyst does not contain noble metals and is thus inexpensive, and also its constituent materials are not volatized at exhaust gas temperatures, so it has superior durability. Another object is to provide a diesel particulate filter (DPF) for control of diesel engine exhaust emissions that uses the catalyst.

Disclosure of the Invention

The foregoing objects are accomplished by means of a diesel engine exhaust gas particulate matter oxidation catalyst using a perovskite-type composite oxide that has an NO adsorption domain over the entire range of 200-450˚C, or at least a part thereof. This perovskite-type composite oxide may be represented by the structural formula $RTO_3$, wherein R is one or more elements selected from a group made up of the rare-earth elements, alkali metal elements excluding Na and alkaline-earth metal elements; and T is one or more elements selected from a group made up of the transition metal elements and Mg, Al and Si. In particular, a preferable constitution is one wherein R comprises one or

2

more elements selected from a group made up of La, Sr, Ba, Ca and Li, and T comprises one or more elements selected from a group made up of Mn, Fe, Co, Cu, Zn, Ga, Zr, Mo, Mg, Al and Si. Note that Y is treated as a rare-earth element.

In an exhaust gas atmosphere that contains NO, this catalyst initiates the combustion of particulate matter constituted primarily of carbon in diesel engine exhaust at a temperature below 450˚C. In addition, the present invention also provides a particulate matter filter for control of diesel engine exhaust emissions that carries any of these catalysts.

A diesel engine exhaust particulate matter (PM) oxidation catalyst that uses the perovskite-type composite oxide defined in the present invention is able to burn particulate matter that accumulates in a diesel particulate filter (DPF) for control of diesel engine exhaust emissions at low temperature, so the amount of particulate matter released into the atmosphere is reduced and also the temperature of the exhaust gas passing through the filter can be lowered in comparison with that in the prior art, and thus the load on various members of the exhaust system is lessened. In addition, catalytic action with high activity can be achieved without containing noble metals, so the materials cost for the particulate filter can be reduced. Moreover, the catalyst according to the present invention does not contain material that is volatilized at exhaust gas temperatures, so it also has superior durability. Accordingly, the present invention improves the durability of a DPF system and provides a greatly reduced total cost.

Brief Description of the Drawings

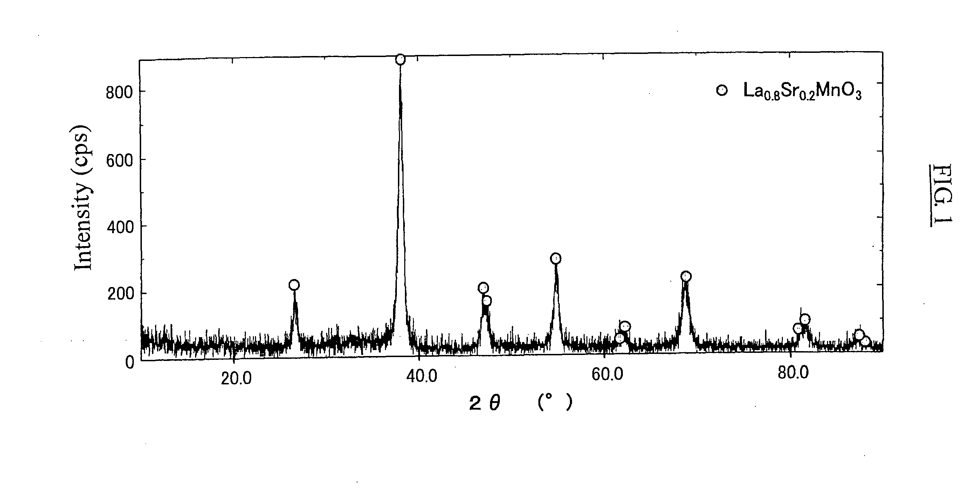

FIG. 1 is a diagram showing the x-ray diffraction pattern of a perovskite-type composite oxide used in Working Example 1.

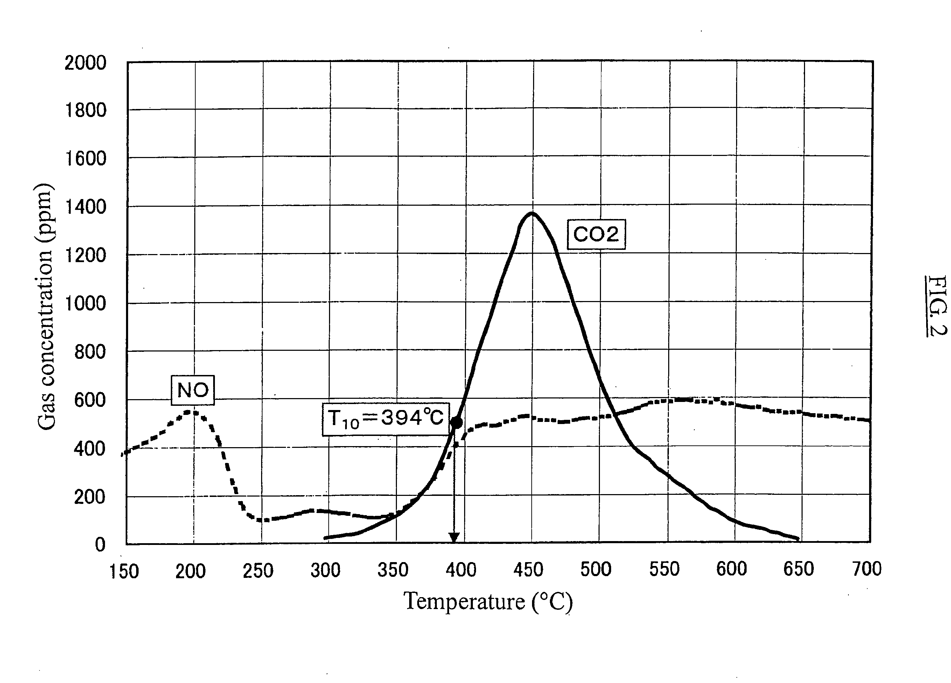

FIG. 2 is a graph of the changes in the NO concentration and $CO_2$ concentration in the output-side gas as a function of temperature in the warm-up process when simulated diesel engine exhaust is passed through a sample of particles of the perovskite-type composite oxide according to Working Example 1.

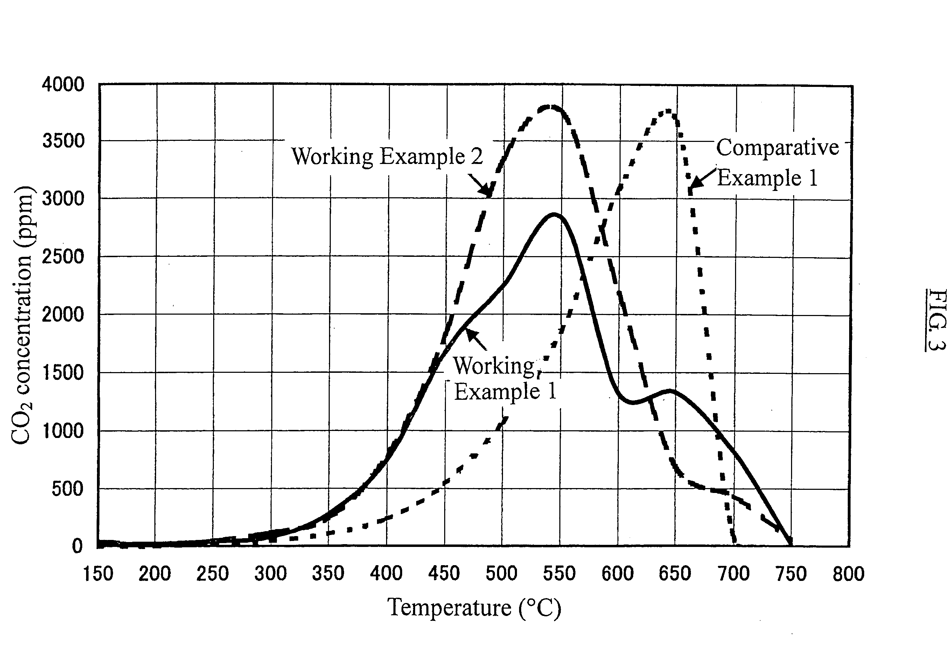

FIG. 3 is a graph of the change in the $CO_2$ concentration in the output-side gas as a function of temperature in the warm-up process when simulated diesel engine exhaust is passed through samples of honeycomb filters carrying catalysts obtained by means of Working Examples 1 and 2 and Comparative Example 1.

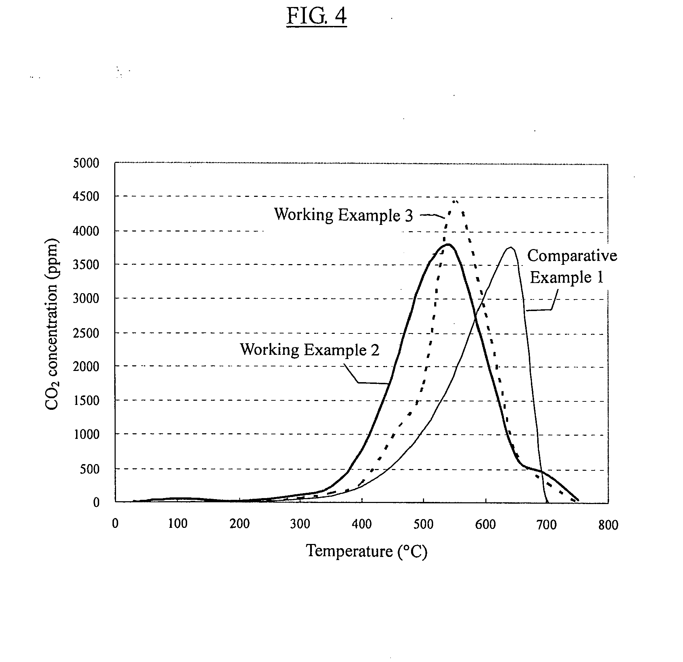

FIG. 4 is a graph of the change in the $CO_2$ concentration in the output-side gas as a function of temperature in the warm-up process when simulated diesel engine exhaust is passed through samples of honeycomb filters carrying catalysts obtained by means of Working Examples 2 and 3 and Comparative Example 1.

Preferred Embodiments of the Invention

In a conventional catalytic-type particulate filter, the nitrogen mono-oxide (NO) contained in diesel engine exhaust is oxidized on the surface of a metal catalyst such as Pt to form nitrogen dioxide ($NO_2$), and this $NO_2$ is used to oxidize (burn) particulate matter constituted primarily of carbon, thereby regenerating the filter.

In contrast, with the present invention, a perovskite-type composite oxide that has an NO adsorption domain at a temperature range below 450˚C (e.g., 200-450˚C) is used instead of the metal catalyst such as Pt. According to research conducted by the present inventors, this type of perovskite-type composite oxide was found to have the property of simultaneously inducing the reaction of oxidizing (burning) carbon particles to $CO_2$ and re-releasing NO at around 300-450˚C. The particulate matter (PM) constituted primarily of carbon contained in diesel engine gas normally has a combustion temperature of 500˚C or higher, so the perovskite-type composite oxide used in the present invention has the catalytic action of burning PM at low temperature.

This perovskite-type composite oxide may be represented by the generic formula $RTO_3$. Here, R is one or more elements selected from a group made up of the rare-earth elements (Y is also treated as a rare-earth element), alkali metal elements excluding Na and alkaline-earth metal elements. However, it preferably contains at least one or more alkali metal elements and alkaline-earth metal elements. The above catalytic action is exhibited particularly markedly by such compositions. T is one or more elements selected from a group made up of the transition metal elements plus Mg, Al and Si. While there are no particular limitations on the rare-earth elements comprising R, they may be Y, La, Ce, Nd, Sm, Pr or the like, or preferably La. While there are no particular limitations on the transition-metal elements constituting T, they may be Ti, V, Cr, Mn, Fe, Co, Ni, Cu, Zn, Ga, Zr, Mo, Ru, Rh, Pd, Ag, In, Sn, Pt, Au or the like, or preferably Ti, Mn, Fe, Co, Ni, Cu, Zn, Ga, Zr or Mo. Examples of elements other than the rare-earth elements that may constitute R include alkali metal elements excluding Na and alkaline-earth metal elements that may be contained in a form replacing a portion of the rare-earth elements. Examples include Li, K, Ca, Sr, Ba and the like, but these are preferably Li, Sr or Ba. From a standpoint of achieving a marked catalytic effect, rather than having R comprise only rare-earth elements, it is more preferable for it to include at least one or more of Li, Ca, Sr or Ba.

Patent Reference Document 3 discloses the use of a Na-based precipitating agent in order to obtain a precipitate of the composite oxide, but according to the research conducted by the present inventors, it is necessary for effecting the catalytic action for burning PM at low temperature to make the amount of Na within the perovskite-type composite oxide as small as possible, or specifically the Na content should be 0.7 mass % or less, or more preferably zero. It is typically difficult to remove Na-based constituents that are incorporated from the raw materials. It was found that if Na-based constituents are present as impurities, the ignition temperature tends to increase as shown in the subsequent Working Examples.

In the perovskite-type composite oxide having such a composition, what has an NO adsorption domain within the temperature range 200-450˚C, and has the property of simultaneously inducing the reaction of oxidizing (burning) carbon particles to $CO_2$ and re-releasing NO at around 300-450˚C are realized. If a powder of such a perovskite-type composite oxide is carried upon a cordierite or SiC or other substrate constituting a honeycomb instead of the conventional Pt catalyst or the like, then one obtains a highly active and highly durable diesel particulate filter (DPF) for purification of diesel engine exhaust emissions that is able to burn the particulate matter (PM) in diesel engine exhaust at low temperature.

The perovskite-type composite oxide used in the present invention may be produced by a coprecipitation method, organic complex method, alkoxide method, or a method using an amorphous precursor, for example. Here follows a description of the various production methods.

Coprecipitation Method

In the coprecipitation method, an aqueous solution of salts of raw materials that contains salts of the aforementioned elements in stoichiometric ratios appropriate to produce the perovskite-type composite oxide $RTO_3$ is pre-pared, this aqueous solution is mixed with a neutralizing agent to induce coprecipitation and then the coprecipitate thus obtained is dried and then heat-treated. The salts of the elements used are not particularly limited, but rather any of their sulfates, nitrates, phosphates, chlorides or other inorganic salts, acetates, oxalates or other organic salts or the like may be used. Among these, the acetates and nitrates are particularly suitable. The aqueous solution of salts of raw materials may be prepared by adding the salts of the aforementioned elements to water so as to reach the desired stoichiometric ratios and then stirring.

Then, this aqueous solution of salts of raw materials is mixed with a neutralizing agent to induce coprecipitation. There is no particular limitation with respect to the neutralizing agent used, but rather ammonia, potassium hydroxide and other inorganic bases, or triethylamine, pyridine or other organic bases can be used. In addition, the neutralizing agent is mixed in until the pH of the slurry formed after adding the neutralizing agent becomes 6-14. When mixed in this manner, a highly crystalline coprecipitate of hydroxides of the various elements can be obtained. The use of a base that contains Na at this time is not preferable because Na will become incorporated into the product.

If necessary, the coprecipitate thus obtained is rinsed with water and may be dried by vacuum drying or forced-air drying, for example, and then subjected to heat treatment at 600-1200˚C, or preferably 800-1000˚C to obtain the desired perovskite-type composite oxide. There is no particular limitation on the atmosphere used at the time of heat treatment as long as it is within a range wherein the perovskite-type composite oxide is produced, and an air, nitrogen, argon or hydrogen atmosphere or one of these combined with water vapor, or preferably an air or nitrogen atmosphere or one of these combined with water vapor may be used.

Organic Complex Method

In the organic complex method, a salt that forms an organic complex of citric acid, malic acid or the like and salts of the aforementioned elements may be added to water in the desired stoichiometric ratios and stirred to prepare an aqueous solution of salts of raw materials.

This aqueous solution of salts of raw materials is dried to form an organic complex of the aforementioned elements and then calcined and subjected to heat treatment to obtain the perovskite-type composite oxide.

The salts of the elements used may be the same as those used in the case of the coprecipitation method. The aqueous solution of salts of raw materials may also be prepared by dissolving a mixture of the raw material salts of the various elements in the desired stoichiometric ratios and then mixing this with an aqueous solution of a salt that forms an organic complex. Note that the molar ratio of the salt that forms an organic complex that is mixed in the blend is preferably around 1.2-3 mol per 1 mol of the perovskite-type composite oxide thus obtained.

Thereafter, this raw-material liquid is dried to obtain the aforementioned organic complex. There are no particular limitations to the drying conditions used as long as the temperature is such that the organic complex does not decompose, so for example, drying can be performed at room temperature to roughly 150˚C, or preferably from room temperature to 110˚C to quickly remove the moisture. The aforementioned organic complex is thus obtained.

The organic complex thus obtained is calcined and then heat-treated. Calcining may be performed by heating to 250˚C or higher in a vacuum or in an inert gas atmosphere, for example. Thereafter, heat treatment at 600-1000˚C, or preferably 600-950˚C, for example may be performed to obtain the desired perovskite-type composite oxide. At this time, there is no particular limitation on the atmosphere used at the time of heat treatment as long as it is within a range wherein the perovskite-type composite oxide is produced, and an air, nitrogen, argon or hydrogen atmosphere or one of these combined with water vapor, or preferably an air or nitrogen atmosphere or one of these combined with water vapor may be used.

Alkoxide Method

In the alkoxide method, an alkoxide solution of raw materials that contains alkoxides of the aforementioned elements in stoichiometric ratios is prepared, this solution of raw materials is reacted with water to induce hydrolysis and obtain a precipitate. The precipitate thus obtained can be dried and then heat-treated to obtain the desired perovskite-type composite oxide.

The alkoxides of the elements used are not particularly limited as long as the elements mix uniformly, but rather for example, any alcoholates formed of methoxy, ethoxy, propoxy, isopropoxy, butoxy and other alkoxy groups may be used. The alkoxide solution of raw materials may be prepared by dissolving these alkoxides in an organic solvent so as to reach the desired stoichiometric ratios and then stirring and blending. The organic solvent that can be used is not particularly limited as long as it is able to dissolve the alkoxides of the elements, so for example, benzene, toluene, xylene and the like may be used.

Then, water is added to this raw material solution to induce hydrolysis and obtain a precipitate. If necessary, the precipitate thus obtained is rinsed with water and may be dried by vacuum drying or forced-air drying, for example, and then subjected to heat treatment at 500-1000˚C, or preferably 500-850˚C to obtain the desired perovskite-type composite oxide. There is no particular limitation on the atmosphere used at the time of heat treatment as long as it is within a range wherein the perovskite-type composite oxide is produced, and an air, nitrogen, argon or hydrogen atmosphere or one of these combined with water vapor, or preferably an air or nitrogen atmosphere or one of these combined with water vapor may be used.

Method using an Amorphous Precursor

In the method using an amorphous precursor, as disclosed by the present inventors in Japanese Patent Application No. 2004-61882 (and the corresponding United States Patent Application Serial No. 10/803,963 and European Patent Application No. 04007386.8) and Japanese Patent Application No. 2004-61901 (and the corresponding United States Patent Application Serial No. 10/809,709 and European Patent Application No. 04007387.6), a precursor substance comprising of a powdery amorphous containing the aforementioned elements in stoichiometric ratios appropriate to produce the perovskite-type composite oxide with the $RTO_3$ structure may be heat treated at low temperature to obtain the perovskite-type composite oxide.

Such an amorphous precursor can be obtained by preparing an aqueous solution of salts of raw materials that contains salts of the aforementioned elements in stoichiometric ratios appropriate to produce the perovskite-type composite oxide with the $RTO_3$ structure, reacting this aqueous solution with a precipitating agent which is a carbonate containing ammonium ion or an alkaline carbonate at a reaction temperature of 60˚C or lower and at a pH of 6 or higher to make a precipitation product, and drying its filtrate.

More specifically, first a nitrate, sulfate, chloride or other aqueous mineral salt of R and a nitrate, sulfate, chloride or other aqueous mineral salt of T are dissolved in water to prepare an aqueous solution wherein the molar ratio of the R element to the T element becomes 1:1. The molar ratio of the R element to the T element should ideally be made 1:1, but even if it is not 1:1 a perovskite-type composite oxide can still be formed. Accordingly, even if the molar ratio of the R element to the T element is shifted somewhat from 1:1, it is fine as long as it is a value that allows a perovskite-type composite oxide to be formed. Note that the R element may comprise two or more components and the T element may also comprise two or more components. In this case, the various components should be dissolved such that the molar ratio of the total number of moles of the elements that constitute R to the total number of moles of the elements that constitute T becomes roughly 1:1.

The ion concentrations of R and T in the solution in which the precipitate is to be formed are such that the upper limit is determined by the solubility of the salts used and should be such that crystalline compounds of R or T do not precipitate, but normally the total ion concentration of R and T is preferably roughly in the range 0.01-0.60 mol/L.

In order to obtain amorphous precipitates from this solution, it is preferable to use a precipitating agent which is a carbonate containing ammonium ion or an alkaline carbonate, and examples of such a precipitating agent include ammonium carbonate, ammonium hydrogen carbonate and the like, but if necessary, aqua ammonia or another base may also be added. In addition, after a precipitate is formed using aqua ammonia or the like, it is also possible to blow in carbon dioxide to obtain an amorphous substance suitable as the amorphous precursor to the perovskite-type composite oxide used in the present invention. When the amorphous precipitate is to be obtained, it is preferable that the pH of the solution be controlled to be in the range 6-11. If the pH is lower than 6, this is inappropriate because the rare-earth elements constituting R may not form a precipitate. On the other hand, if the pH is higher than 11, in the case of the use of a precipitating agent alone, hydroxides or other crystalline precipitates may be formed without the precipitates thus formed being adequately converted to the amorphous state. In addition, the reaction temperature can be 60˚C or lower. If the reaction is started at a temperature above 60˚C, crystalline compound particles of R or T may be produced, and these may interfere with the conversion to an amorphous precursor and are thus not preferable. The use of a precipitating agent that contains sodium was found to increase the ignition temperature. This is thought to be because, if sodium is incorporated into the precursor, no matter how well it is washed, it will still remain at a concentration of roughly several hundred ppm and this will cause deleterious effects on the characteristics of ignition temperature and the like.

The amorphous precursor thus obtained is rinsed with water as optionally and may be dried by vacuum drying or forced-air drying, for example, and then subjected to heat treatment at 500-1000˚C, or preferably 500-800˚C to obtain the desired perovskite-type composite oxide. There is no particular limitation on the atmosphere used at the time of heat treatment as long as it is within a range wherein the perovskite-type composite oxide is produced, and an air, nitrogen, argon or hydrogen atmosphere or one of these combined with water vapor, or preferably an air or nitrogen atmosphere or one of these combined with water vapor may be used.

Working Examples

Working Example 1

Lanthanum nitrate, strontium nitrate and manganese nitrate were mixed such that the molar ratios of the elements lanthanum, strontium and manganese became 0.8:0.2:1.0. This mixture was added to water in such amount that the total molar concentration of the elements lanthanum, strontium and manganese in the solution became 0.2 mol/L. This solution of raw materials was stirred while the temperature of the solution was adjusted to 25˚C, and at the stage that the temperature reached 25˚C, a mixed solution of ammonia carbonate and aqua ammonia was added as a precipitating agent while adjusting to pH=9. Thereafter, stirring was continued for six hours while maintaining the reaction temperature at 25˚C, allowing the production of the precipitate to advance sufficiently. The precipitate thus obtained was recovered by filtration, rinsed with water and dried at 110˚C. The powder thus obtained is called the precursor powder.

Next, this precursor powder was subjected to heat treatment at 600˚C in air and thus calcined. FIG. 1 shows the x-ray diffraction pattern of the calcine thus obtained. Upon comparing the x-ray diffraction chart of FIG. 1 against a JCPDS card chart, this calcine was confirmed to be a substance with a $(La_{0.8}Sr_{0.2})MnO_3$ perovskite-type composite oxide phase.

Working Example 2

Working Example 1 was repeated except that lanthanum nitrate, strontium nitrate and iron nitrate were used as the raw materials and were mixed such that the molar ratios of the elements lanthanum, strontium and iron became 0.8:0.2:1.0.

As a result of analysis of the crystal structure by x-ray diffraction, the calcine was confirmed to have a $(La_{0.8}Sr_{0.2})$ $FeO_3$ perovskite-type composite oxide phase. In addition, as a result of analysis of the composition by atomic absorption analysis, Na exhibited a value less than 1 ppm (less than the measurement limit).

Working Example 3

A portion of the perovskite-type composite oxide obtained in Working Example 2 was sampled and subjected to heat treatment for 24 hours at 800˚C. The heat treatment was performed in air.

Comparative Example 1

Commercial $SiO_2$ (Wakogel C-100 made by Wako Pure Chemical Industries, Ltd.) was impregnated with Pt using an aqueous solution of $[Pt(NH_3)_4](OH)_2$ and dried by forced air for 12 hours at 120˚C. The impregnate thus obtained was reduced for 4 hours at 400˚C in 4% $H_2$ (the remainder being $N_2$) and then subsequently oxidized for 2 hours at 500˚C in air to obtain $SiO_2$ containing Pt. The Pt content of the $SiO_2$ was 1 mass % at this time.

Comparative Example 2

Working Example 2 was repeated except that sodium hydroxide was used as the precipitating agent. As a result of atomic absorption analysis of the composition of the perovskite-type composite oxide particulate powder thus obtained, its Na content was found to be 0.77 mass %.

Evaluation of the PM Combustion Temperature Based on Particulate Samples

The PM combustion temperature was evaluated as follows in accordance with the method recited in Kankyō Hozen Kenkyū Seikashū ("Environmental Protection Research Results," National Institute of Industrial Health of Japan) (1999), 1, pp. 37-1-37-13.

Each of the powders obtained in Working Example 1 and Comparative Example 1 was press-formed with a die press at 500 kg/cm$^2$ and then crushed to prepare particulate samples with a grain size of 0.25-0.50 mm. As simulated PM, commercial carbon black was added to these particulate samples so as to become 1 mass.%, and they were mixed by shaking in a glass bottle. The state of contact between the carbon and the catalyst samples achieved by this mixing method becomes the state of "loose contact" close to that when PM is actually caught on a filter.

The aforementioned particulate samples mixed with carbon black were loaded into ventilated fixed beds which were put into contact with a constant flow of the simulated diesel engine exhaust gas shown in Table 1, so that the concentrations of $CO_2$ and NO in the gas passing through the ventilated fixed beds could be continuously measured. Then, once the flow of simulated diesel exhaust gas was started, the temperature was raised from room temperature to 800˚C at a warm-up rate of 10˚C/minute while the concentrations of $CO_2$ and NO in the gas passing through the ventilated fixed beds was monitored.

The $CO_2$ concentration and the NO concentration were measured using a Nicolet Nexus 470 FT-IR.

FIG. 2 illustrates an example of the changes in the $CO_2$ concentration and NO concentration in the case of Working Example 1. As one can see from FIG. 2, the downstream NO concentration dropped rapidly at 200-250˚C and exhibited values below 200 ppm over approximately the range 250-350˚C. This means that the NO drawn into the air flow began to be adsorbed to the perovskite-type composite oxide at 200-250˚C. Thereafter, as the $CO_2$ concentration increased rapidly from around 350˚C, the NO concentration began to increase again. Then, from around 400˚C, the NO concentration began to exhibit a value nearly equal to the inflow concentration of 500 ppm. Because the increase in the NO concentration from around 350˚C occurred at the same time as the increase in the $CO_2$ concentration accompanying the combustion of carbon black (simulated PM), clearly the NO adsorbed to the perovskite-type composite oxide was active in the combustion of carbon black. It is thought that when the NO adsorbed to the perovskite-type composite oxide is desorbed, some substance that has a strong oxidation activity (e.g., activated oxygen) is released, thus causing the combustion (oxidation) of carbon black. The ignition temperature of the carbon black used here is around 560˚C, so one can see that the perovskite-type composite oxide acted as a catalyst in inducing low-temperature combustion of the simulated PM.

The ignition temperature $T_{10}$ was found in the measure as the temperature at which the amount of $CO_2$ generated as found by measuring the gas passing through the ventilated fixed bed reached 10% of the total amount of $CO_2$ generated. The results in Working Example 1 and Comparative Example 1 are presented in Table 2.

Table 1

| NO | $O_2$ | $H_2O$ | $N_2$ |
|---|---|---|---|
| 500 ppm | 10% | 7% | Remainder |

Table 2

| | Composition | Ignition temperature ($T_{10}$) |
|---|---|---|
| Working Example 1 | $(La_{0.8}Sr_{0.2})MnO_3$ | 394˚C |
| Comparative Example 1 | $Pt/SiO_2$ | 430˚C |

As one can see from Table 2, despite containing no precious metal at all, the perovskite-type composite oxide according to Working Example 1 demonstrated a lower PM combustion temperature and higher activity than the Pt-impregnated $SiO_2$ catalyst according to Comparative Example 1. In addition, this perovskite-type composite oxide contains no water-soluble components such as potassium (K), so it can be expected to exhibit good durability.

PM can be burned at low temperature using the perovskite-type composite oxide that adsorbs NO in the 200-450˚C temperature range, and thus the amount of PM released can be reduced. The mechanism by which this low-temperature combustion of PM occurs is unclear at the present time, but the following can be surmised.

[1] NO within the exhaust gas is oxidized by $O_2$ in the atmosphere by means of catalytic action of the perovskite-type composite oxide, thus being adsorbed to the perovskite-type composite oxide in the form of $NO_2$ or nitrate ion.
[2] When these species are again desorbed, a strongly oxidizing nitrogen oxide or activated oxygen is formed.
[3] The PM is caused to combust at low temperature by the nitrogen oxide or activated oxygen thus formed, thereby producing NO and $CO_2$.

Evaluation of the PM Combustion Temperature Based on Honeycomb Filter Samples

Each of the powders obtained in Working Example 1, Working Example 2 and Comparative Example 1 was wash-coated onto a 200 cpsi cordierite honeycomb structure used as a DPF. The amount of coating was such that there were 10 parts by mass powder to 100 parts by mass honeycomb structure. Thereafter, they were uniformly covered with commercial carbon black as simulated PM. The amount of carbon applied was such that there were 2 parts by mass powder to 100 parts by mass honeycomb structure.

The honeycomb filter samples thus obtained were loaded into ventilated fixed beds which were put into contact with a constant flow of the simulated diesel engine exhaust gas shown in Table 3, so that the concentrations of $CO_2$ in the gas passing through the ventilated fixed beds could be continuously measured. In Table 3, $SV$ is the spatial velocity represented by the following equation.

$$SV = \frac{\text{total gas flow (liters/minute)}}{\text{catalyst volume (cc)}}$$

Then, once the flow of simulated diesel vehicle exhaust gas was started, the temperature was raised from room temperature to 750˚C at a warm-up rate of 10˚C/minute while the $CO_2$ concentration in the gas passing through the ventilated fixed beds was monitored.

The $CO_2$ concentration was measured using a Shimadzu FID-methanizer.

FIG. 3 illustrates an example of the changes in the $CO_2$ concentration in Working Examples 1 and 2 and Comparative Example 1. As one can see from FIG. 3; the increase in the $CO_2$ concentration accompanying carbon black (simulated PM) combustion in Working Examples 1 and 2 occurred starting at a low temperature of approximately 300˚C. In other words, in the same manner as in the particulate samples above, one can see that the perovskite-type composite oxide acted as a catalyst in inducing low-temperature combustion of the simulated PM.

The ignition temperature $T_{10}$ is presented in Table 4.

Table 3

| NO | $O_2$ | $H_2O$ | $N_2$ | $SV$ |
|---|---|---|---|---|
| 1000 ppm | 10% | 7% | Remainder | 20000/h |

Table 4

| | Composition | Ignition temperature ($T_{10}$) |
|---|---|---|
| Working Example 1 | $(La_{0.8}Sr_{0.2})MnO_3$ | 397˚C |
| Working Example 2 | $(La_{0.8}Sr_{0.2})FeO_3$ | 402˚C |
| Comparative Example 1 | $Pt/SiO_2$ | 478˚C |

As one can see from Table 4, despite containing no precious metal at all, the perovskite-type composite oxide catalysts according to the present invention (Working Examples 1 and 2) were confirmed to exhibit the action of markedly lowering the PM combustion temperature, and were found to have a high practical value. In other words, the catalyst according to the present invention can be expected to give higher performance and higher reliability than the conventional precious-metal catalysts in practice.

Evaluation of Catalytic Effectiveness after Heating to High Temperature

The perovskite-type composite oxide obtained after heat treatment (after heat treatment at 800˚C for 24 hours) in Working Example 3 was evaluated in the same manner as in FIG. 3 above and the results are shown in FIG. 4. For comparison, FIG. 4 also illustrates the results with a Pt catalyst that was not heat-treated (that of Comparative Example 1) and a perovskite-type composite oxide that was not subjected to heat treatment (that of Working Example 2), for comparison with that of Working Example 3.

As is clear from the results of FIG. 4, in comparison with that of the unheated Working Example 2, the oxide of Working Example 3 that was subjected to heat treatment exhibited a somewhat lower efficiency of conversion from carbon to $CO_2$ in the low-temperature region, but no extreme drop in activity occurred. Moreover, that of Working Example 3 that was subjected to heat treatment kept activity superior to that of the conventional Pt catalyst according to Comparative Example 1 that underwent catalytic evaluation without being subjected to heat treatment. In other words, the perovskite-type composite oxide according to the present invention keeps its catalytic activity even under severe environments and is able to perform the combustion of particulate matter in an environment at a lower temperature in comparison to conventional catalysts.

Note that when the ignition temperature for Working Example 2 and Comparative Example 2 were compared, that of Working Example 2 was 358˚C while that of Comparative Example 2 was 380˚C, thus confirming that ones that contain sodium have a slightly higher ignition temperature.

### Claims

1.  A diesel engine exhaust gas particulate matter oxidation catalyst using a perovskite-type composite oxide that has an NO adsorption domain in the range 200-450˚C.

2.  A diesel engine exhaust gas particulate matter oxidation catalyst according to claim 1, wherein the perovskite-type composite oxide may be represented by the structural formula RTO3, where R is one or more elements selected from a group made up of the rare-earth elements, alkali metal elements excluding Na and alkaline-earth metal elements; and T is one or more elements selected from a group made up of the transition metal elements and Mg, Al and Si.

3.  A diesel engine exhaust gas particulate matter oxidation catalyst according to claim 1, wherein the perovskite-type composite oxide may be represented by the structural formula $RTO_3$, where R comprises one or more elements selected from a group made up of La, Sr, Ba, Ca and Li; and T comprises one or more elements selected from a group made up of Mn, Fe, Co, Cu, Zn, Ga, Zr, Mo, Mg, Al and Si.

4.  A diesel engine exhaust gas particulate matter oxidation catalyst according to any of claims 1-3, wherein, in an exhaust gas atmosphere that contains NO, the catalyst initiates the combustion of particulate matter constituted primarily of carbon in diesel engine exhaust at a temperature below 450˚C.

5.  A particulate matter filter for control of diesel engine exhaust emissions that carries a diesel engine exhaust gas particulate matter oxidation catalyst according to any of claims 1-4.

## FIG. 1

FIG. 2

FIG. 3

## FIG. 4

| **INTERNATIONAL SEARCH REPORT** | International application No. |
|---|---|
| | PCT/JP2005/013987 |

A.  CLASSIFICATION OF SUBJECT MATTER
*B01J23/34*(2006.01), *B01D53/94*(2006.01), *B01J23/78*(2006.01), *F01N3/10*
(2006.01), *B01D46/42*(2006.01)

According to International Patent Classification (IPC) or to both national classification and IPC

B.  FIELDS SEARCHED

Minimum documentation searched (classification system followed by classification symbols)
*B01J21/00*(2006.01)-*B01J38/74*(2006.01), *B01D53/86*(2006.01), *B01D53/94*
(2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 9-267040 A  (Nippon Soken, Inc.), 14 October, 1997 (14.10.97), Claim 1 (Family: none) | 1-5 |
| X | JP 5-184929 A  (Riken Corp.), 27 July, 1993 (27.07.93), Claims 1, 4 (Family: none) | 1-5 |
| X | JP 1-307452 A  (Matsushita Electric Industrial Co., Ltd.), 12 December, 1989 (12.12.89), Claim 1 (Family: none) | 1-5 |

| ☒   Further documents are listed in the continuation of Box C. | ☐   See patent family annex. |
|---|---|

\*     Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| 18 October, 2005 (18.10.05) | 01 November, 2005 (01.11.05) |
| Name and mailing address of the ISA/ | Authorized officer |
| Japanese Patent Office | |
| Facsimile No. | Telephone No. |

Form PCT/ISA/210 (second sheet) (April 2005)

**INTERNATIONAL SEARCH REPORT**

| | International application No. |
|---|---|
| | PCT/JP2005/013987 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2-17911 A  (Toyota Motor Corp.),<br>22 January, 1990 (22.01.90),<br>Claim 1<br>(Family: none) | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11253757 A
- JP 2003222014 A
- JP 6029542 B
- JP 2004061882 A
- US 803963 A
- EP 04007386 A
- JP 2004061901 A
- US 809709 A
- EP 04007387 A

**Non-patent literature cited in the description**

- *Earozoru Kenkyū,* 2003, vol. 18 (3), 185-194
- *Jidōsha Gijutsu Kai Gakujutsu Kōenkai Maezurishū,* 2002, vol. 22 (02), 5-8
- *Kinzoku,* 2004, vol. 74 (5), 449-453
- *Nippon Seramikkusu Kyōkai Gakujutsu Ronbunshi,* 2003, vol. 111 (129), 852-856
- Kankyō Hozen Kenkyū Seikashū. National Institute of Industrial Health, 1999, vol. 1, 37-137-13